# EUROPEAN PATENT SPECIFICATION

(11) **EP 2 390 944 B1**
(45) Date of publication and mention of the grant of the patent: **21.02.2018**
(21) Application number: 11250390.9
(22) Date of filing: 28.03.2011
(51) Int. Cl.: H01M 4/134, H01M 10/052, H01M 10/0569, H01M 4/38

(54) **Rechargeable Lithium Battery**
Wiederaufladbare Lithiumbatterie
Batterie au lithium rechargeable

(30) Priority: 28.05.2010 KR 20100050486
(43) Date of publication of application: 30.11.2011
(73) Proprietor: Samsung SDI Co., Ltd., Yongin-si, Gyeonggi-do (KR)
(72) Inventor: Ryu, Jae-Yul, Gyeonggi-do (KR); Choi, Wan-uk, Gyeonggi-do (KR); Kim, Joon-sup, Gyeongi-do (KR); Lee, Jea-Woan, Gyeonnggi-do (KR); Moon, Jin-Hee, Gyeonggi-do (KR); Back, Chang-Kuen, Gyeonggi-do (KR); Kim, Young-Ugk, Gyeonggi-do (KR); Park, Seung-Hee, Gyeonggi-do (KR)
(74) Representative: Mounteney, Simon James

(56) References cited:
- EP-A1- 1 912 274
- EP-A1- 1 955 756
- WO-A1-03/072232
- WO-A1-2004/021476
- WO-A1-2005/038959
- WO-A1-2005/104269
- WO-A1-2010/021248
- WO-A2-03/072231
- WO-A2-03/073534
- WO-A2-2004/021499
- JP-A- 2009 283 273
- US-A1- 2008 299 461
- US-A1- 2009 092 900
- US-A1- 2009 155 677

## Description

### BACKGROUND

### 1. Field

The following description relates to a rechargeable lithium battery.

### 2. Description of the Related Art

Lithium rechargeable batteries have recently drawn attention as a power source for small portable electronic devices. They use an organic electrolyte solution and thereby have a high energy density and twice the discharge voltage of a conventional battery using an alkaline aqueous solution.

The lithium rechargeable batteries include a positive electrode, a negative electrode and an electrolyte.

For positive active materials of a rechargeable lithium battery, lithium-transition element composite oxides being capable of intercalating lithium ion, such as LiCoO₂, LiMn₂O₄, LiNi₁₋ₓCoₓO₂ (0<x<1), and so on, have been researched.

As for negative active materials of a rechargeable lithium battery, various carbon-based materials such as artificial graphite, natural graphite and hard carbon, which can all intercalate and deintercalate lithium ions, or non-carbon-based materials such as silicon, a tin oxide, and a lithium vanadium-based oxide have been used. Further, a separator that plays the role of separating a positive electrode and a negative electrode may be positioned between the positive electrode and the negative electrode, and examples of the separator may include a polymer layer made of electrically insulating polymers such as polyethylene and polypropylene.

### SUMMARY

An aspect of an embodiment of the present invention is directed toward a rechargeable lithium battery having excellent overcharge safety.

According to one embodiment, a rechargeable lithium battery is provided that includes: a positive electrode including a positive active material; a negative electrode including a silicon-based negative active material; an electrolyte including a lithium salt and a non-aqueous organic solvent; and a separator including a polymer substrate and a ceramic-containing coating layer on the polymer substrate, wherein the ceramic-containing coating layer is positioned only between the polymer substrate and facing the positive active material, wherein the ceramic-containing coating layer comprises a ceramic and a heat resistant resin in a mixing ratio of about 50 : 50 wt% to about 90 : 10 wt%, wherein the ceramic-containing coating layer has porosity at or between about 60% and about 80% and a thickness at or between about 3µm and about 5µm. The rechargeable lithium battery has capacity per volume of more than or equal to about 700Wh/ℓ.

The ceramic-containing coating layer may have a pore per unit volume at or between about 0.6cc/cc and about 0.8cc/cc.

A ceramic of the ceramic-containing coating layer may include Al₂O₃, MgO, TiO₂, Al (OH)₃, Mg(OH)₂, Ti(OH)₄, or a combination thereof.

The ceramic may have an average particle size at or between about 50nm and about 500nm.

The heat resistant resin may be selected from the group consisting of an aramid resin, a polyamideimide resin, a polyimide resin, and a combination thereof.

The polymer substrate may be a substrate made using a polyolefin resin.

The silicon-based negative active material may be Si, SiOₓ (0 < x < 2), a Si-T alloy, or a combination thereof. T is selected from the group consisting of alkaline metals, alkaline-earth metals, group 13 elements, group 14 elements, transition metals, rare earth elements, and combinations thereof, and is not Si.

The non-aqueous organic solvent includes an ethylene carbonate-based organic solvent of the following Chemical Formula 1, and the ethylene carbonate-based organic solvent may be included in an amount of about 10 vol% to about 30 vol% based on total volume of the non-aqueous organic solvent. The ethylene carbonate-based organic solvent may be included in an amount at or between about 15 vol% and about 25 vol% based on the total volume of the non-aqueous organic solvent. The ethylene carbonate-based organic solvent may include fluoroethylene carbonate. 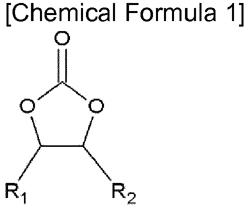 wherein, R₁ and R₂ are the same or different, and are selected from the group consisting of hydrogen, halogen groups, a cyano group (CN), a nitro group (NO₂), and substituted alkyl groups, and at least one of R₁ and R₂ is the halogen group or the substituted alkyl group. According to an embodiment, the substituted alkyl group is a C1 to C5 substituted alkyl group. Also, according to an embodiment, the substituted alkyl group is an alkyl group in which at least one hydrogen is substituted with fluorine.

A rechargeable lithium battery according to one embodiment may have excellent overcharge safety.

According to a first aspect of the invention, there is provided a rechargeable lithium battery as set out in claim 1. Preferred features of this aspect are set out in claims 2 to 11.

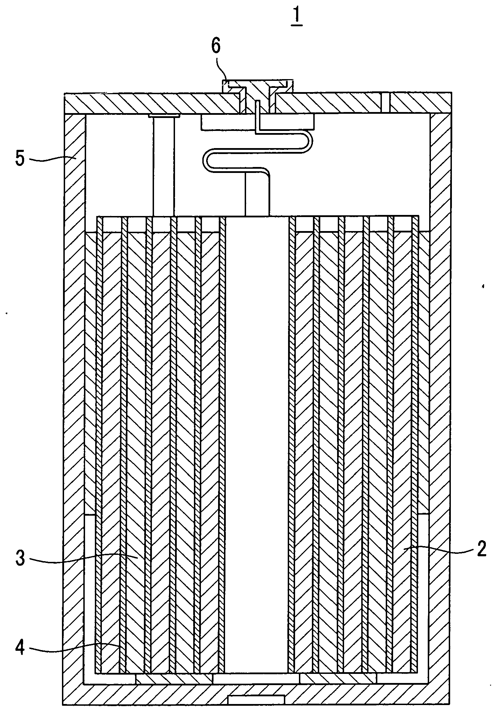

### BRIEF DESCRIPTION OF THE DRAWING

The accompanying drawing, together with the specification, illustrate exemplary embodiments of the present invention, and, together with the description, serve to explain the principles of the present invention.

The drawing is a schematic view of a rechargeable lithium battery according to one embodiment.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when a first element is described as being "coupled to" a second element, the first element may be directly coupled to the second element or may also be indirectly coupled to the second element with one or more intervening elements interposed there between. Further, some of the elements that are not essential to the complete understanding of the invention are omitted for clarity. Also, like reference numerals refer to like elements throughout the specification.

Hereinafter, embodiments of the present invention will be described in more detail with reference to the drawing so that those skilled in the art can easily implement the present invention.

A rechargeable lithium battery according to one embodiment includes a positive electrode including a positive active material, a negative electrode including a silicon-based negative active material, an electrolyte including a lithium salt and a non-aqueous organic solvent, and a separator.

In one embodiment, the silicon-based negative active material includes Si, SiOₓ (0 < x < 2), a Si-T alloy, or a combination thereof. T is selected from the group consisting of alkaline metals, alkaline-earth metals, group 13 elements, group 14 elements, transition metals, rare earth elements, and combinations thereof, and is not Si.

The rechargeable lithium battery using the silicon-based negative active material may be a high-capacity rechargeable lithium battery. In one embodiment, the rechargeable lithium battery has a capacity per volume of more than or equal to about 700Wh/ℓ, and in another embodiment, it has a capacity per volume of about 700Wh/ℓ to about 900Wh/ℓ.

A ceramic-containing coating layer is disposed on a polymer substrate used as a separator to compensate for the poor safety of the high-capacity rechargeable lithium battery during overcharge.

The separator includes a polymer substrate and a ceramic-containing coating layer disposed on the polymer substrate. The ceramic-containing coating layer may improve safety of a battery, particularly overcharge safety. The ceramic-containing coating layer is disposed on one side of the polymer substrate so as to face the positive electrode.

The separator includes a ceramic-containing coating layer on a surface of a polymer substrate. The polymer substrate does not directly contact a positive active material layer due to the intervening ceramic-containing coating layer. Thus, the shortcomings regarding metal-ion elution that may occur at high temperatures may be effectively suppressed. The shortcomings regarding metal-ion elution is caused when a polymer substrate facing the positive electrode directly contacts an active material layer and the active material acts as an oxidizing catalyst to oxidize the polymer.

The ceramic-containing coating layer has a porosity of about 60% to about 80%. When the ceramic-containing coating layer has a porosity within the range, the battery performance is enhanced since the effect of the ceramic-containing coating layer is sufficiently obtained and/or ion mobility is smoothly facilitated.

The total thickness of the ceramic-containing coating layer is at or between about 3µm and about 5µm. The thickness of the ceramic-containing coating layer refers to a thickness of the ceramic-containing coating layer on one side of the separator when the ceramic-containing coating layer is disposed on only one side of the separator. When the ceramic-containing coating layer has a thickness within the range, suitable safety is obtained and/or ions are easily transferred.

The ceramic-containing coating layer with respect to the unit volume has a pore per unit volume of about 0.6cc/cc to about 0.8cc/cc.

In one embodiment, the ceramic includes Al₂O₃, MgO, TiO₂, Al (OH)₃, Mg (OH)₂, Ti (OH)₄, or a combination thereof.

In one embodiment, the ceramic has an average particle size at or between about 50nm and about 500nm.

The coating layer further includes a heat resistant resin as a binder. The heat resistant resin may include an aramid resin, a polyamideimide resin, a polyimide resin, or a combination thereof. The aramid resin is an aromatic polyamide resin, for example, a meta-aramid resin where phenyl groups are bound to a main chain except for an amide group at meta-positions, and a para-aramid resin where phenyl groups are bound to a main chain except for an amide group at para-positions. Any heat resistant resin that may impart heat resistance and does not have a bad effect on a battery reaction may be used.

In one embodiment, the coating layer is formed by mixing a ceramic and a heat resistant resin in a solvent to provide a mixture, and coating the mixture on a polymer substrate. The solvent is volatilized during a drying process, and therefore the ceramic and the aramid resin remain as a coating layer.

The mixing ratio of a ceramic and a heat resistant resin is about 50: 50 wt% to about 90: 10 wt%, and in one embodiment, about 60: 40 wt% to about 80: 20 wt%. When the mixing ratio of a ceramic and a heat resistant resin is within the range, suitable pores are formed, eluting of metal ions is easily controlled, separator coating is easily performed, and/or heat resistance is ensured.

Since the coating layer is formed by mixing the ceramic and the heat resistant resin at the mixing ratio, the final mixing ratio of the ceramic and the heat resistant resin of the final coating layer may be the same as the above range.

Further, any organic solvent that may dissolve a heat resistant resin may be used as the solvent. Examples of the solvent include N-methyl pyrrol idone.

In one embodiment, the polymer substrate is a substrate formed by a polyolefin. Examples of the polyolefin include a polyethylene-based resin, a polypropylene-based resin, and a combination thereof.

Further examples of the polyolefin include a polyethylene-based resin such as a low density polyethylene, a liner polyethylene (ethylene- α -olefin copolymer), and a high density polyethylene; a polypropylene-based resin such as polypropylene and an ethylene-propylene copolymer; and the like.

In one embodiment, the polymer substrate is at or between about 8µm and about 20µm thick, and in one embodiment, is at or between about 10µm and about 17µm thick. In one embodiment when the polymer substrate has a thickness within the range, a shut-down function is suitably obtained.

The ceramic-containing coating layer is at or between about 3µm and about 5µm thick. When the ceramic-containing coating layer has a thickness within the range, heat shrinkage may be suppressed, and metal ion elution may be controlled in accordance with maintaining heat resistance.

In a rechargeable lithium battery according to one embodiment, the Si-based negative active material includes Si, SiOₓ (0 < x < 2), a Si-T alloy, or a combination thereof. T is selected from the group consisting of alkaline metals, alkaline-earth metals, group 13 elements, group 14 elements, transition metals, rare earth elements, and combinations thereof, and is not Si.

The rechargeable lithium battery according to one embodiment includes a positive active material included in the positive electrode including lithiated intercalation compounds that reversibly intercalate and deintercalate lithium ions. In one embodiment, the positive active material includes a composite oxide including lithium as well as at least one selected from the group consisting of cobalt, manganese, and nickel.

In one embodiment, the following lithium-containing compounds are used: LiₐA_{1-b}X_{b}D₂ (0.90 ≤ a ≤ 1.8 and 0 ≤ b ≤ 0.5); LiₐA_{1-b}X_{b}O_{2-c}D_{c} (0.90 ≤ a ≤ 1.8, 0 ≤ b ≤ 0.5, and 0 ≤ c ≤ 0.05); LiₐE_{1-b}X_{b}O_{2-c}D_{c} (0.90 ≤ a ≤ 1.8, 0 ≤ b ≤ 0.5, and 0 ≤ c ≤ 0.05); LiₐE_{2-b}X_{b}O_{4-c}D_{c} (0.90 ≤ a ≤ 1.8, 0 ≤ b ≤ 0.5, and 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, and 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.5, and 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.5, and 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, and 0 < α ≤ 2); LiₐNi_{1-b-c}Mn_{b}X_{c}O_{2-α}T_{α} (0.90 ≤ a ≤ 1.8, 0 ≤ b 0.5, 0 ≤ c ≤ 0.05, and 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, and 0 < α < 2); LiₐNi_{b}E_{c}G_{d}O₂ (0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤c ≤ 0.5, and 0 ≤ d ≤ 0.5, 0.001 ≤ e ≤ 0.1); LiₐNiG_{b}O₂ (0.90 ≤ a ≤ 1.8 and 0.001 ≤ b ≤ 0.1) LiₐCoG_{b}O₂ (0.90 ≤ a ≤ 1.8 and 0.001 ≤ b ≤ 0.1); LiₐMn_{1-b}G_{b}O₂ (0.90 ≤ a ≤ 1.8 and 0.001 ≤ b ≤ 0.1); LiₐMn₂G_{b}O₄ (0.90 ≤ a ≤ 1.8 and 0.001 ≤ b ≤ 0.1); LiₐMn_{1-g}G_{g}PO₄ 0.001 ≤ a ≤ 1.8 and 0 ≤ g ≤ 0.5); QO₂; QS₂; LiQS₂; V₂O₅; LiV₂O₅; LiZO₂; LiNiVO₄; Li_{(3-f)}J₂(PO₄)₃(0 ≤ f ≤ 2); Li_{(3-f)}Fe₂(PO₄)₃(0 ≤ f ≤ 2); and/or LiFePO₄.

In the above Chemical Formulae, A is selected from the group consisting of Ni, Co, Mn, and combinations thereof; X is selected from the group consisting of Al, Ni, Co, Mn, Cr, Fe, Mg, Sr, V, rare earth elements, and combinations thereof; D is selected from the group consisting of O, F, S, P, and combinations thereof; E is selected from the group consisting of Co, Mn, and combinations thereof; T is selected from the group consisting of F, S, P, and combinations thereof; G is selected from the group consisting of Al, Cr, Mn, Fe, Mg, La, Ce, Sr, V, and combinations thereof; Q is selected from the group consisting of Ti, Mo, Mn, and combinations thereof; Z is selected from the group consisting of Cr, V, Fe, Sc, Y, and combinations thereof; and J is selected from the group consisting of V, Cr, Mn, Co, Ni, Cu, and combinations thereof.

In one embodiment, the positive active material includes the positive active material with the coating layer, or a combination of the positive active material and the positive active material coated with the coating layer. In one embodiment, the coating layer includes at least one coating element compound selected from the group consisting of oxides of the coating element and hydroxides of the coating element, oxyhydroxides of the coating element, oxycarbonates of the coating element, and hydroxycarbonates of the coating element.

The compound for the coating layer may be either amorphous or crystalline.

In one embodiment, the coating element included in the coating layer is selected from Mg, Al, Co, K, Na, Ca, Si, Ti, V, Sn, Ge, Ga, B, As, Zr, and combinations thereof.

The coating process may include any conventional processes as long as it does not causes any side effects on the properties of the positive active material, e.g., spray coating and/or immersing.

The rechargeable lithium battery includes an electrolyte including a lithium salt and a non-aqueous organic solvent. The non-aqueous organic solvent includes an ethylene carbonate-based organic solvent of the following Chemical Formula 1. 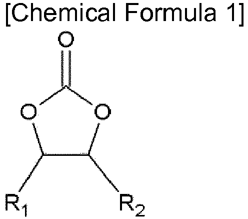 wherein, R₁ and R₂ are the same or different, and are independently selected from the group consisting of hydrogen, halogen groups, a cyano group (CN), a nitro group (NO₂), and substituted alkyl groups, and at least one of R₁ and R₂ is the halogen group or the substituted alkyl group. According to an embodiment, the substituted alkyl group is a C1 to C5 substituted alkyl group. Also, according to an embodiment, the substituted alkyl group is an alkyl group in which at least one hydrogen is substituted with fluorine.

The rechargeable lithium batteryincludes a separator including a ceramic-containing coating layer disposed on the polymer substrate. Therefore, high temperature cycle-life degradation due to excessive elution of cations from a positive active material at a high temperature may be prevented in a rechargeable lithium battery with a Si-based negative active material and an excess amount of ethylene carbonate-based organic solvent. Generally, the Si-based negative active material requires an excess amount of ethylene carbonate-based organic solvent in order to improve cycle-life characteristics at room temperature, but this causes excessive elution of cations from a positive active material at high temperatures, thereby deteriorating the high temperature cycle-life characteristics.

In one embodiment, the ethylene carbonate-based organic solvent of Chemical Formula 1 is included in the non-aqueous organic solvent in an amount at or between about 10 vol% and about 30 vol% based on the total volume of the non-aqueous organic solvent. In one embodiment, the ethylene carbonate-based organic solvent of Chemical Formula 1 is included in an amount at or between about 15 vol% and about 25 vol%.

In one embodiment when the ethylene carbonate-based organic solvent of Chemical Formula 1 is included as a non-aqueous organic solvent of the electrolyte, for example, when it is included in a somewhat excess amount, that is, when it is at or between about 10 vol% and about 30 vol% based on the total volume of the non-aqueous organic solvent, the rechargeable lithium battery using the Si-based negative active material has an improved cycle-life characteristic at room temperature.

Examples of the compound of Chemical Formula 1 include difluoroethylene carbonate, chloroethylene carbonate, dichloroethylene carbonate, bromoethylene carbonate, dibromoethylene carbonate, fluoroethylene carbonate, and combinations thereof. In one embodiment, the compound represented by the above Chemical Formula 1 is fluoroethylene carbonate.

The fluoroethylene carbonate may be included in an amount at or between about 15 vol% and about 25 vol% based on the total volume of the non-aqueous organic solvent.

In one embodiment, examples of the non-aqueous organic solvent include an ethylene carbonate-based organic solvent of Chemical Formula 1 as a first solvent, and include a carbonate-based solvent that does not include a halogen as a second solvent ("halogen-free carbonate-based solvent"). In one embodiment, the second solvent further includes the halogen-free carbonate-based solvent with an ester-based solvent, an ether-based solvent, a ketone-based solvent, an alcohol-based solvent, an aprotonic solvent, or a combination thereof. In one embodiment, examples of the halogen-free carbonate-based solvent of the second solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and combinations thereof.

In one embodiment, examples of the ester-based solvent include methyl acetate, ethyl acetate, n-propyl acetate, dimethyl acetate, methyl propionate, ethyl propionate, γ -butyrolactone, decanolide, valerolactone, mevalonolactone, caprolactone, and combinations thereof. In one embodiment, examples of the ether-based solvent include dibutyl ether, tetraglyme, diglyme, dimethoxyethane, 2-methyltetrahydrofuran, tetrahydrofuran, and combinations thereof.

In one embodiment, examples of the ketone-based solvent include cyclohexanone and the like, and examples of the alcohol-based solvent include ethanol, isopropyl alcohol, and combinations thereof. Examples of the aprotic solvent include nitriles such as R-CN, where R is a C2 to C20 linear, branched, or cyclic hydrocarbon, a double bond, an aromatic ring, or an ether bond; amides such as dimethylformamide; dioxolanes such as 1,3-dioxolane; sulfolanes; and the like.

In one embodiment when the second solvent is used in a mixture, the mixture ratio is controlled in accordance with desirable battery performance.

In one embodiment, the halogen-free carbonate-based solvent as the second solvent includes a mixture of a cyclic carbonate and a linear carbonate. The cyclic carbonate and the linear carbonate are mixed together in a volume ratio at or between about 1:1 and about 1:9. In one embodiment when the mixture is used as an electrolyte, the electrolyte performance is enhanced.

In one embodiment, the second solvent is a mixture of the halogen-free carbonate-based solvent and an aromatic hydrocarbon-based organic solvent. The halogen-free carbonate-based solvent and the aromatic hydrocarbon-based solvent according to one embodiment are mixed together in a volume ratio at or between about 1:1 and about 30:1.

In one embodiment, the aromatic hydrocarbon-based organic solvent is represented by the following Chemical Formula 2. 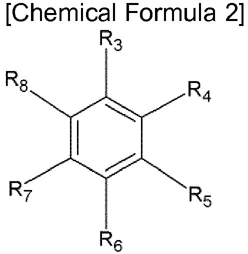 wherein, R₃ to R₈ are the same or different, and are independently selected from the group consisting of hydrogen, halogen groups, C1 to C10 alkyl groups, C1 to C10 haloalkyl groups, and combinations thereof.

The aromatic hydrocarbon-based organic solvent may include, but is not limited to, at least one selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

In one embodiment, the electrolyte further includes vinylene carbonate as an additive in order to improve the cycle life of a battery. The use amount of the additive for improving the cycle life may be adjusted within an appropriate range.

In one embodiment, the electrolyte further includes a nitrile-based additive in order to improve a high temperature cycle-life characteristic. Examples of the nitrile-based additive include succino nitrile, glutaro nitrile, adipo nitrile, pimelo nitrile, subero nitrile, and combinations thereof. In one embodiment, the amount of the nitrile-based additive is at or between about 3 wt% and about 5 wt% with respect to the total weight of the non-aqueous organic solvent and a lithium salt-containing electrolyte.

The lithium salt is dissolved in a non-aqueous organic solvent, supplies lithium ions in the battery, operates the basic operation of a rechargeable lithium battery, and improves lithium ion transport between positive and negative electrodes. Examples of the lithium salt include LiPF₆, LiBF₄, LiSbF₆, LiAsF₆, LiCF₃SO₃, LiN (SO₂C₂F₅)₂, Li (CF₃SO₂)₂N, LiN (SO₃C₂F₅)₂, LiC₄F₉SO₃, LiClO₄, LiAlO₄, LiAlO₂, LiAlCl₄, LiN(CₓF₂ₓ₊₁SO₂)(CyF_{2y+1}SO₂) (where x and y are natural numbers), LiCl, LiI, LiB(C₂O₄)₂ (lithium bisoxalato borate: LiBOB), and combinations thereof.

In one embodiment, the lithium salt is included in a concentration at or between about 0.1 M and about 2.0 M. When the lithium salt is included at the above concentration range, electrolyte performance and lithium ion mobility may be enhanced due to optimal electrolyte conductivity and viscosity.

In one embodiment, the positive electrode and the negative electrode include a current collector and an active material layer disposed on the current collector and including an active material.

In one embodiment, the active material layer is a positive active material layer including the positive active material in an amount at or between about 90 wt% and about 98 wt% based on the total weight thereof.

The positive active material layer further includes a binder and a conductive material. In one embodiment, the binder and the conductive material are included in an amount at or between about 1 wt% and about 5 wt% with respect to the total weight of the positive active material layer.

The binder improves binding properties of the positive active material particles to each other and to a current collector. Examples of the binder include polyvinyl alcohol, carboxylmethyl cellulose, hydroxypropyl cellulose, diacetyl cellulose, polyvinylchloride, carboxylated polyvinylchloride, polyvinylfluoride, ethylene oxide-containing polymers, polyvinylpyrrolidone, polyurethane, polytetrafluoroethylene, polyvinylidenefluoride, polyethylene, polypropylene, styrene-butadiene rubbers, acrylated styrene-butadiene rubbers, epoxy resins, nylon, and the like, but are not limited thereto.

The conductive material improves electrical conductivity of a negative electrode. Any electrically conductive material may be used as a conductive agent unless it causes a chemical change. Examples of the conductive material include carbon-based materials such as natural graphite, artificial graphite, carbon black, acetylene black, ketjen black, carbon fiber, and the like; metal-based materials including a metal powder or a metal fiber of copper, nickel, aluminum, silver, and the like; conductive polymers such as polyphenylene derivatives; and mixtures thereof.

The current collector may be Al, but is not limited thereto.

The positive active material layer may be fabricated by coating apositive active material composition slurry including a positive active material, a binder, a conductive material, and an organic solvent on a current collector. An example of the solvent includes N-methylpyrrolidone and the like, but is not limited thereto.

In one embodiment, the active material layer is a negative active material layer including at or between about 85 wt% and about 95 wt% of a negative active material based on the total weight of the negative active material layer.

The negative active material layer includes a binder, and optionally a conductive material. In one embodiment, the negative active material layer includes the binder in an amount at or between about 1 wt% and about 5 wt% based on the total weight of the negative active material layer. In an alternative embodiment, the negative active material layer further includes a conductive material, and includes at or between about 85 wt% and about 95 wt% of the negative active material, at or between about 5 wt% and about 15 wt% of the binder, and at or between 1 wt% and about 5 wt% of the conductive material.

The binder improves binding properties of negative active material particles with one another and with a current collector. In one embodiment the binder includes a non-water-soluble binder, a water-soluble binder, or a combination thereof.

Examples of the non-water-soluble binder include polyvinylchloride, carboxylated polyvinylchloride, polyvinylfluoride, ethylene oxide-containing polymers, polyvinylpyrrolidone, polyurethane, polytetrafluoroethylene, polyvinylidene fluoride, polyethylene, polypropylene, polyamideimide, polyimide, and combinations thereof.

Examples of the water-soluble binder include styrene-butadiene rubbers, acrylated styrene-butadiene rubbers, polyvinyl alcohol, sodium polyacrylate, copolymers including propylene and C2 to C8 olefins, copolymers of (meth)acrylic acid and (meth)acrylic acid alkyl ester, and combination thereof.

In one embodiment when the water-soluble binder is used as a negative electrode binder, a cellulose-based compound is further used to provide viscosity. The cellulose-based compound includes one or more compounds selected from the group consisting of carboxylmethyl cellulose, hydroxypropylmethyl cellulose, methyl cellulose, and alkaline metal salts thereof. The alkaline metal is selected from the group consisting of sodium (Na), potassium (K), and lithium (Li). In one embodiment the cellulose-based compound is included in an amount at or between 0.1 and 3 parts by weight based on 100 parts by weight of the binder.

The conductive material is included to improve electrode conductivity. Any electrically conductive material may be used as a conductive material unless it causes a chemical change. Examples of the conductive material include carbon-based materials such as natural graphite, artificial graphite, carbon black, acetylene black, ketjen black, carbon fiber, and the like; metal-based materials of metal powder or metal fiber including copper, nickel, aluminum, silver, and the like; conductive polymers such as polyphenylene derivatives; and mixtures thereof.

In one embodiment, the current collector is selected from the group consisting of copper foils, nickel foils, stainless steel foils, titanium foils, nickel foams, copper foams, polymer substrates coated with a conductive metal, and combinations thereof.

The negative electrode is fabricated by preparing a negative active material composition through mixing a negative active material, a binder, and a conductive material in a solvent; and then coating the negative active material composition on a current collector. In one embodiment, an example of the solvent, in the case of using a non-water-soluble binder, includes organic solvents such as N-methylpyrrolidone, and in the case of using a water-soluble binder, includes water, but is not limited thereto.

The drawing provides a schematic view showing the representative structure of a rechargeable lithium battery according to one embodiment. However, the structure of the rechargeable lithium battery is not limited the structure of the drawing, and may have a structure such as a cylindrical, a prismatic, coin-type, pouch-type, or the like. Referring to the drawing, the rechargeable lithium battery 1 is prepared to include a negative electrode 2; a positive electrode 3; a separator 4 disposed between the negative electrode 2 and the positive electrode 3; an electrolyte impregnated in the negative electrode 2, the positive electrode 3, and the separator 4; a battery case 5; and a sealing member 6 sealing the battery case 5.

The following examples illustrate embodiments of the present invention in more detail. These examples, however, should not in any sense be interpreted as limiting the scope of the present invention.

### (Example 1)

A positive active material slurry was prepared by mixing 94 wt% of a LiCoO₂ positive active material, 3 wt% of a carbon black conductive material, and 3 wt% of a polyvinylidene fluoride binder in an N-methylpyrrolidone solvent. A positive electrode was fabricated by coating an aluminum foil current collector with the positive active material slurry, and drying and rolling the aluminum foil current collector coated with the positive active material slurry.

A negative active material slurry was prepared by mixing 92 wt% of a SiOₓ (x=0.99) negative active material and 8 wt% of a polyamideimide binder in an N-methylpyrrolidone solvent. A negative electrode was fabricated by coating a copper current collector with the negative active material slurry, and drying and rolling the copper current collector coated with the negative active material slurry.

Fluoroethylene carbonate, ethylene carbonate, ethylmethyl carbonate, and diethylcarbonate were mixed in a volume ratio of 20 volume%:10 volume%:20 volume%:50 volume% to prepare a mixed solvent. LiPF₆ was added to the mixed solvent to prepare a mixture containing LiPF₆ at a concentration of 1.3M. Succinonitrile was added in an amount of 5 wt% with respect to the total weight of the mixture to prepare an electrolyte.

Al₂O₃ having an average particle diameter of 200nm and a meta-aramid resin were mixed in a weight ratio of about 80 wt% : about 20 wt% in a N-methylpyrrolidone solvent to prepare a coating layer composition, and the coating layer composition was coated in one side of a polyethylene substrate having a thickness of about 17µm and porosity of about 40%. Thereby a separator having a coating layer including Al₂O₃ and an aramid resin having a thickness of about 3µm was prepared. Porosity of the coating layer was about 72%, and pore per unit volume was about 0.72cc/cc.

A rechargeable lithium battery cell having capacity per volume of about 730Wh/ℓ was prepared using the positive electrode, the negative electrode, and the electrolyte. Herein, the coating was positioned to face the positive electrode, that is to say, was positioned on the positive electrode side to fabricate a rechargeable lithium battery cell.

### (Example 2)

Al₂O₃ having an average particle diameter of 200nm and a meta-aramid resin were mixed in a weight ratio of about 80 wt%: about 20 wt% in a N-methylpyrrolidone solvent to prepare a coating layer composition, and the coating layer composition was coated on one side of a polyethylene substrate having a thickness of about 15µm and porosity of about 40%. Thereby a separator having a coating layer including Al₂O₃ and an aramid resin having a thickness of about 5µm was prepared. Porosity of the coating layer was about 72%, and pore per unit volume was about 0.72cc/cc.

A rechargeable lithium battery cell having capacity per volume of about 730Wh/ℓ was prepared using the positive electrode, the negative electrode, and the electrolyte according to Example 1, except for using the resulting separator. Herein, the coating layer was positioned to face the positive electrode, that is to say, was positioned on the positive electrode side to fabricate a rechargeable lithium battery cell.

### (Comparative Example 1)

A positive active material slurry was prepared by mixing 94 wt% of a LiCoO₂ positive active material, 3 wt% of a carbon black conductive material, and 3 wt% of a polyvinylidene fluoride binder in an N-methylpyrrolidone solvent. A positive electrode was fabricated by coating an aluminum foil current collector with the positive active material slurry, and drying and rolling the aluminum foil current collector coated with the positive active material slurry.

A negative active material slurry was prepared by mixing 92 wt% of a SiOₓ (x=0.99) negative active material and 8 wt% of a polyamideimide binder in an N-methylpyrrolidone solvent. A negative electrode was fabricated by coating a copper current collector with the negative active material slurry, and drying and rolling the copper current collector coated with the negative active material slurry.

Fluoroethylene carbonate, ethylene carbonate, ethylmethyl carbonate, and diethylcarbonate were mixed in a volume ratio of 20 volume%:10 volume%:20 volume%:50 volume% to prepare a mixed solvent. LiPF₆ was added to the mixed solvent to prepare a mixture containing LiPF₆ at a concentration of 1.3M. Succinonitrile was added in an amount of 5 wt% with respect to the total weight of the mixture to prepare an electrolyte.

A polyethylene substrate having a thickness of about 20µm and porosity of about 40% was used as a separator.

A rechargeable lithium battery cell having capacity per volume of about 730Wh/ℓ was prepared using the positive electrode, the negative electrode, and the electrolyte.

### (Comparative Example 2)

A separator having a coating layer including Al₂O₃ and an aramid resin was prepared by mixing Al₂O₃ having an average particle diameter of 200nm and a meta-aramid resin in a weight ratio of about 80 wt%: about 20 wt% in a N-methylpyrrolidone solvent to prepare a coating layer composition, and coating the coating layer composition on both sides of a polyethylene substrate having a thickness of about 14µm and porosity of about 40%. Herein, a thickness of one side of the coating layer was about 3µm, and that of the other side was about 4µm. Porosity of both sides of the coating layer was about 45%, and pore per unit volume was about 0.45cc/cc.

A rechargeable lithium battery cell was prepared using the positive electrode, the negative electrode, and the electrolyte according to Example 1, except for using the resulting separator. A rechargeable lithium battery cell having capacity per volume of about 730Wh/ℓ was fabricated by positioning the coating layer having a 3µm thickness on the positive electrode side facing the positive electrode, and the coating layer having a 4µm thickness on the negative electrode facing the negative electrode.

### (Comparative Example 3)

Al₂O₃ having an average particle diameter of 200nm and a meta-aramid resin were mixed in a weight ratio of about 80 wt%: about 20 wt% in a N-methylpyrrolidone solvent to prepare a coating layer composition, and the coating layer composition was coated on both sides of a polyethylene substrate having a thickness of about 10µm and porosity of about 40%, and thereby a separator having a coating layer including Al₂O₃ and an aramid resin having a thickness of about 5µm was prepared on either side of the substrate. Porosity of the coating layer was about 45%, and pore per unit volume was about 0.45cc/cc.

A rechargeable lithium battery cell having capacity per volume of about 730Wh/ℓ was prepared using the same positive electrode, the same negative electrode, and the same electrolyte as in Example 1, except for using the resulting separator.

### (Comparative Example 4)

Al₂O₃ having an average particle diameter of 200nm and a meta-aramid resin were mixed in a weight ratio of about 80 wt%: about 20 wt% in a N-methylpyrrolidone solvent to prepare a coating layer composition, and the coating layer composition was coated on one side of a polyethylene substrate having a thickness of about 13µm and porosity of about 40%, and thereby a separator having a coating layer including Al₂O₃ and an aramid resin having a thickness of about 7µm was prepared. Porosity of the coating layer was about 45%, and pore per unit volume was about 0.45cc/cc.

A rechargeable lithium battery cell having capacity per volume of about 730Wh/ℓ was fabricated using the same positive electrode, the same negative electrode, and the same electrolyte as in Example 1, except for using the resulting separator. Herein, the coating layer was positioned to face the positive electrode, that is to say, was positioned on the positive electrode side to fabricate a rechargeable lithium battery cell.

### (Comparative Example 5)

Al₂O₃ having an average particle diameter of 200nm and a meta-aramid resin were mixed at a weight ratio of about 80 wt%: about 20 wt% in a N-methylpyrrolidone solvent to prepare a coating layer composition, and the coating layer composition was coated on one side of a polyethylene substrate having a thickness of about 10µm and porosity of about 40%, and thereby a separator having a coating layer including Al₂O₃ and an aramid resin having a thickness of about 10µm was prepared. Porosity of the coating layer was about 45%, and pore per unit volume was about 0.45cc/cc.

A rechargeable lithium battery cell having capacity per volume of about 730Wh/ℓ was fabricated using the same positive electrode, the same negative electrode, and the same electrolyte as in Example 1, except for using the resulting separator. Herein, the coating was positioned to face the positive electrode, that is to say, was positioned on the positive electrode side to fabricate a rechargeable lithium battery cell.

The rechargeable lithium battery cells according to Examples 1 and 2 and Comparative Examples 1 to 5 were charged at 0.05C and discharged at 0.05C under a 4.35V cut-off charge and a 2.5V cut-off discharge condition. After the rechargeable lithium battery cells were charged and discharged once, their charge capacities with respect to the discharge capacities were calculated to obtain formation efficiency, which is reported in the following Table 1.

Five rechargeable lithium battery cells according to each of Examples 1 and 2 and Comparative Examples 1 to 5 were fabricated, and adiabatic overcharging of the battery cells at 2C to 18.5V was performed. The results are shown in the following Table 1. In the following Table 1, LX (X ranges from 0 to 5) refers to stability of the battery cells indicating more stable battery cells as the X value is smaller. The results according to X are as follows:

L0: no change; L1: leakage, L2: smoke; L3: exothermic at 200°C or less; L4: exothermic at more than 200°C; L5: explosion.

In the following Table 1, the numbers before L refer to the numbers of battery cells exhibiting the indicated stability. For example, 2L1 and 3L4 indicate that two battery cells show L1 and three battery cells show L4 of the battery cells, respectively.

The rechargeable lithium battery cells according to Examples 1 and 2 and Comparative Examples 1 to 5 are trickle-charged at 60°C under a 4.35V constant voltage condition to measure a current interrupt device (CID) value. The results are shown in the following Table 1.

**Table 1**

| | Polyethyle ne substrate th ickness (µm) | Coating layer thickness (µm) | | Formation efficiency (%) | Overcharge result (level) | CID opening time (hr) |
|---|---|---|---|---|---|---|
| | | Positive electrode side | Negative electrode side | | | |
| Comparative Example 1 | 20 | - | - | 94.1 | 5L5 | 123 |
| Comparative Example 2 | 14 | 3 | 4 | 92.4 | 4L1, 1 L5 | 285 |
| Comparative Example 3 | 10 | 5 | 5 | 91.8 | 1 L1, 4L5 | 361 |
| Example 1 | 17 | 3 | - | 93.9 | 5L0 | 266 |
| Example 2 | 15 | 5 | - | 93.3 | 3L0, 2L1 | 380 |
| Comparative Example 4 | 13 | 7 | - | 92.7 | 4L1, 1L5 | 367 |
| Comparative Example 5 | 10 | 10 | - | 92.2 | 5L5 | 375 |

As shown in the Table 1, the rechargeable lithium battery cells of Examples 1 and 2 using a separator having a coating layer with a suitable thickness disposed only on the positive electrode side show excellent formation efficiency and overcharge safety.

Further, the rechargeable lithium battery cells of Examples 1 and 2 show a long CID opening time, which indicates excellent reliability.

Meanwhile, the rechargeable lithium battery cell of Comparative Example 1 using a separator without a coating layer shows degradation in terms of overcharge safety and reliability.

The rechargeable lithium battery cells of Comparative Examples 2 and 3 using a separator having a coating layer on both sides and where a sum of both sides of the coating layers is excessive, and having small porosity of the coating layer, show relatively deteriorated overcharge stability. Further, the rechargeable lithium battery cells of Comparative Examples 4 and 5 using a separator having a thick coating layer facing only the positive electrode may have deteriorated overcharge safety.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A rechargeable lithium battery comprising:
a positive electrode comprising a positive active material;
a negative electrode comprising a silicon-based negative active material;
an electrolyte comprising a lithium salt and a non-aqueous organic solvent, wherein the non-aqueous organic solvent comprises an ethylene carbonate-based organic solvent of Chemical Formula 1: 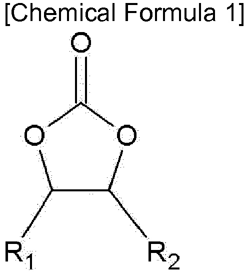
wherein, R₁ and R₂ are the same or different, and are selected from the group consisting of hydrogen, halogen groups, a cyano group (CN), a nitro group (NO₂), and substituted alkyl groups, and at least one of R₁ and R₂ is the halogen group or the substituted alkyl group; and
a separator comprising a polymer substrate and a ceramic-containing coating layer on the polymer substrate,
wherein the ceramic-containing coating layer is positioned only between the polymer substrate and facing the positive active material, thereby suppressing metal-ion elution therebetween,
wherein the ceramic-containing coating layer comprises a ceramic and a heat resistant resin in a mixing ratio of about 50 : 50 wt% to about 90 : 10 wt%,
wherein the ceramic-containing coating layer has a porosity from about 60% to about 80%, and
the ceramic-containing coating layer has a thickness from about 3 µm to about 5 µm.

2. A rechargeable lithium battery according to any one of claim 1, wherein the ceramic-containing coating layer has a pore per unit volume from about 0.6cc/cc to about 0.8cc/cc.

3. A rechargeable lithium battery according to any one of claims 1 to 2, wherein a ceramic of the ceramic-containing coating layer comprises Al₂O₃, MgO, TiO₂, Al(OH)₃, Mg(OH)₂, Ti(OH)₄, or a combination thereof.

4. A rechargeable lithium battery according to any one of claims 1 to 3, wherein the heat resistant resin is selected from the group consisting of aramid resins, polyamideimide resins, polyimide resins, and combinations thereof.

5. A rechargeable lithium battery according to any one of claims 1 to 4, wherein the polymer substrate comprises a polyolefin resin.

6. A rechargeable lithium battery according to any one of claims 1 to 5, wherein a ceramic of the ceramic-containing coating layer has an average particle size from about 50nm to about 500nm.

7. A rechargeable lithium battery according to any one of claims 1 to 6, wherein the negative active material comprises Si, SiOₓ (0 < x < 2), a Si-T alloy, or a combination thereof, wherein T is selected from the group consisting of alkaline metals, alkaline-earth metals, group 13 elements, group 14 elements, transition metals, rare earth elements, and combinations thereof, and is not Si.

8. A rechargeable lithium battery according to any one of claims 1 to 7, wherein the rechargeable lithium battery has capacity per volume of more than or equal to about 700Wh/ℓ, optionally wherein the rechargeable lithium battery has capacity per volume at or between about 700Wh/ℓ and about 900Wh/ℓ.

9. A rechargeable lithium battery according to any of claims 1 to 8, wherein the substituted alkyl group is a C1 to C5 substituted alkyl group; and/or
wherein the substituted alkyl group is an alkyl group in which at least one hydrogen is substituted with fluorine.

10. A rechargeable lithium battery according to any of claims 1 to 9, wherein the ethylene carbonate-based organic solvent is included in an amount at or between about 10 vol% and about 30 vol% based on the total volume of the non-aqueous organic solvent.

11. A rechargeable lithium battery according to any one of claims 1 to 10, wherein the non-aqueous organic solvent comprises fluoroethylene carbonate, optionally wherein the fluoroethylene carbonate is included in an amount at or between about 15 vol% and about 25 vol% based on the total volume of the non-aqueous organic solvent.

## Patentansprüche

1. Wiederaufladbare Lithiumbatterie, umfassend:
eine positive Elektrode, umfassend ein Positiv-Aktivmaterial;
eine negative Elektrode, umfassend ein Negativ-Aktivmaterial auf Siliciumbasis;
einen Elektrolyten, umfassend ein Lithiumsalz und ein nichtwässriges organisches Lösungsmittel, wobei das nichtwässrige organische Lösungsmittel ein auf Ethylencarbonat basierendes organisches Lösungsmittel der chemischen Formel 1 umfasst: 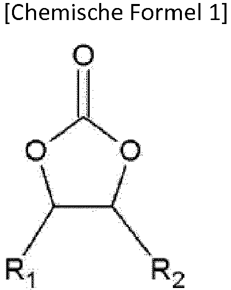
wobei R₁ und R₂ gleich oder verschieden sind, und ausgewählt sind aus der Gruppe bestehend aus Wasserstoff, Halogenresten, einer Cyanogruppe (CN), einer Nitrogruppe (NO₂) und substituierten Alkylresten, und mindestens eines von R₁ und R₂ der Halogenrest oder der substituierte Alkylrest ist; und
einen Separator, umfassend ein Polymersubstrat und eine keramikhaltige Überzugsschicht auf dem Polymersubstrat,
wobei die keramikhaltige Überzugsschicht nur zwischen dem Polymersubstrat und dem Positiv-Aktivmaterial zugewandt positioniert ist, wodurch eine Elution von Metallionen dazwischen unterbunden wird,
wobei die keramikhaltige Überzugsschicht eine Keramik und ein wärmebeständiges Harz in einem Mischungsverhältnis von etwa 50 : 50 Gew.-% bis etwa 90 : 10 Gew.-% umfasst,
wobei die keramikhaltige Überzugsschicht eine Porosität von etwa 60 % bis etwa 80 % aufweist und
die keramikhaltige Überzugsschicht eine Dicke von etwa 3 µm bis etwa 5 µm aufweist.

2. Wiederaufladbare Lithiumbatterie nach einem von Anspruch 1, wobei die keramikhaltige Überzugsschicht ein Porenvolumen pro Volumeneinheit von etwa 0,6 cm³/cm³ bis etwa 0,8 cm³/cm³ aufweist.

3. Wiederaufladbare Lithiumbatterie nach einem der Ansprüche 1 bis 2, wobei eine Keramik der keramikhaltigen Überzugsschicht Al₂O₃, MgO, TiO₂, Al(OH)₃, Mg(OH)₂, Ti(OH)₄ oder eine Kombination davon umfasst.

4. Wiederaufladbare Lithiumbatterie nach einem der Ansprüche 1 bis 3, wobei das wärmebeständige Harz ausgewählt ist aus der Gruppe bestehend aus Aramidharzen, Polyamidimidharzen, Polyimidharzen und Kombinationen davon.

5. Wiederaufladbare Lithiumbatterie nach einem der Ansprüche 1 bis 4, wobei das Polymersubstrat ein Polyolefinharz umfasst.

6. Wiederaufladbare Lithiumbatterie nach einem der Ansprüche 1 bis 5, wobei eine Keramik der keramikhaltigen Überzugsschicht eine mittlere Teilchengröße von etwa 50 nm bis etwa 500 nm aufweist.

7. Wiederaufladbare Lithiumbatterie nach einem der Ansprüche 1 bis 6, wobei das Negativ-Aktivmaterial Si, SiOₓ (0 < x < 2), eine Si-T-Legierung oder eine Kombination davon umfasst, wobei T ausgewählt ist aus der Gruppe bestehend aus Alkalimetallen, Erdalkalimetallen, Elementen der Gruppe 13, Elementen der Gruppe 14, Übergangsmetallen, Seltenerdmetallen und Kombinationen davon und nicht Si ist.

8. Wiederaufladbare Lithiumbatterie nach einem der Ansprüche 1 bis 7, wobei die wiederaufladbare Lithiumbatterie eine Kapazität pro Volumen von mehr als oder gleich etwa 700 Wh/l aufweist, wobei die wiederaufladbare Lithiumbatterie optional eine Kapazität pro Volumen bei oder zwischen etwa 700 Wh/l und etwa 900 Wh/l aufweist.

9. Wiederaufladbare Lithiumbatterie nach einem der Ansprüche 1 bis 8, wobei der substituierte Alkylrest ein substituierter C₁-C₅-Alkylrest ist; und/oder
wobei der substituierte Alkylrest ein Alkylrest ist, bei dem mindestens ein Wasserstoffatom durch Fluor substituiert ist.

10. Wiederaufladbare Lithiumbatterie nach einem der Ansprüche 1 bis 9, wobei das auf Ethylencarbonat basierende organische Lösungsmittel in einer Menge bei oder zwischen etwa 10 Vol.-% und etwa 30 Vol.-%, bezogen auf das Gesamtvolumen des nichtwässrigen organischen Lösungsmittels, enthalten ist.

11. Wiederaufladbare Lithiumbatterie nach einem der Ansprüche 1 bis 10, wobei das nichtwässrige organische Lösungsmittel Fluorethylencarbonat umfasst, wobei das Fluorethylencarbonat optional in einer Menge bei oder zwischen etwa 15 Vol.-% und etwa 25 Vol.-%, bezogen auf das Gesamtvolumen des nichtwässrigen organischen Lösungsmittels, enthalten ist.

## Revendications

1. Pile rechargeable au lithium comprenant :
une électrode positive comprenant un matériau actif positif ;
une électrode négative comprenant un matériau actif négatif à base de silicium ;
un électrolyte comprenant un sel de lithium et un solvant organique non aqueux,
dans laquelle le solvant organique non aqueux comprend un solvant organique à base de carbonate d'éthylène de formule chimique 1 : 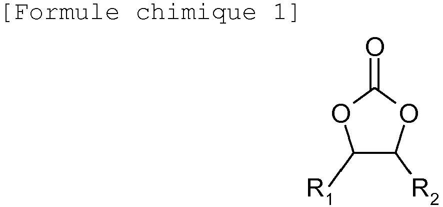
dans laquelle R₁ et R₂ sont identiques ou différents et sont choisis dans le groupe constitué par l'hydrogène, les groupes halogéno, le groupe cyano (CN), le groupe nitro (NO₂), et les groupes alkyle substitués, et au moins l'un de R₁ et R₂ est un groupe halogéno ou un groupe alkyle substitué ; et
un séparateur comprenant un substrat polymère et une couche de revêtement contenant une céramique sur le substrat polymère,
dans laquelle la couche de revêtement contenant une céramique est positionnée uniquement entre le substrat polymère en faisant face au matériau actif positif, ce qui supprime ainsi une élution métal-ion entre eux,
dans laquelle la couche de revêtement contenant une céramique comprend une céramique et une résine résistant à la chaleur en un rapport de mélange d'environ 50/50 % en poids à environ 90/10 % en poids,
dans laquelle la couche de revêtement contenant une céramique a une porosité d'environ 60 % à environ 80 %, et
la couche de revêtement contenant une céramique a une épaisseur d'environ 3 µm à environ 5 µm.

2. Pile au lithium rechargeable selon la revendication 1, dans laquelle la couche de revêtement céramique a une teneur en pores par volume unitaire d'environ 0,6 cm³/cm³ à environ 0,8 cm³/cm³.

3. Pile au lithium rechargeable selon l'une quelconque des revendications 1 à 2, dans laquelle la céramique de la couche de revêtement contenant une céramique comprend Al₂O₃, MgO, TiO₂, Al(OH)₃, Mg(OH)₂, Ti(OH)₄, ou une de leurs combinaisons.

4. Pile au lithium rechargeable selon l'une quelconque des revendications 1 à 3, dans laquelle la résine résistant à la chaleur est choisie dans le groupe constitué par les résines d'aramide, les résines de polyamide-imide, les résines de polyimide, et leurs combinaisons.

5. Pile au lithium rechargeable selon l'une quelconque des revendications 1 à 4, dans laquelle le substrat polymère comprend une résine de polyoléfine.

6. Pile au lithium rechargeable selon l'une quelconque des revendications 1 à 5, dans laquelle la céramique de la couche de revêtement contenant une céramique a une granulométrie moyenne d'environ 50 nm à environ 500 nm.

7. Pile au lithium rechargeable selon l'une quelconque des revendications 1 à 6, dans laquelle le matériau actif négatif comprend Si, SiOₓ (0 < x < 2), un alliage Si-T, ou une de leurs combinaisons, dans laquelle T est choisi dans le groupe constitué par les métaux alcalins, les métaux alcalino-terreux, les éléments du Groupe 13, les éléments du Groupe 14, les métaux de transition, les éléments des terres rares, et leurs combinaisons, et n'est pas Si.

8. Pile au lithium rechargeable selon l'une quelconque des revendications 1 à 7, dans laquelle la pile au lithium rechargeable a une capacité en volume supérieure ou égale à environ 700 Wh/l, éventuellement dans laquelle la pile au lithium rechargeable a une capacité en volume de ou comprise entre environ 700 Wh/l et environ 900 Wh/l.

9. Pile au lithium rechargeable selon l'une quelconque des revendications 1 à 8, dans laquelle le groupe alkyle substitué est un groupe alkyle substitué en C₁ à C₅ ; et/ou
dans laquelle le groupe alkyle substitué est un groupe alkyle dont au moins un hydrogène est remplacé par du fluor.

10. Pile au lithium rechargeable selon l'une quelconque des revendications 1 à 9, dans laquelle le solvant organique à base de carbonate d'éthylène est incorporé en une quantité de ou comprise entre environ 10 % en volume et environ 30 % en volume par rapport au volume total du solvant organique non aqueux.

11. Pile au lithium rechargeable selon l'une quelconque des revendications 1 à 10, dans laquelle le solvant organique non aqueux comprend du carbonate de fluoroéthylène, éventuellement dans laquelle le carbonate de fluoroéthylène est incorporé en une quantité de ou comprise entre environ 15 % en volume et environ 25 % en volume par rapport au volume total du solvant organique non aqueux.
